# EUROPEAN PATENT APPLICATION

(11) **EP 0 961 292 A1**
(43) Date of publication of application: **01.12.1999**
(21) Application number: 98870118.1
(22) Date of filing: 26.05.1998
(51) Int. Cl.: G21C 17/116, B23K 35/00

(54) **Probe, measuring or reference electrode, sensor or feedthrough for high radiation environments and method of making the same**

(71) Applicant: SCK.CEN, 1160 Brussels (BE); VLAAMSE INSTELLING VOOR TECHNOLOGISCH ONDERZOEK, afgekort V.I.T.O., onderneming van openbaar nut onder de vorm van een n.v., 2400 Mol (BE)
(72) Inventor: van Nieuwenhove,Rudi, 3600 Genk (BE); Willems,Louis, 2840 Dessel (BE); Luyten,Jan, 3045 Vaalbeek (BE)
(74) Representative: Bird, William Edward

(57) **Abstract**

A device (40), in particular a probe, measuring or reference electrode, feedthrough or sensor and a method of making the device are disclosed. The device preferably includes a brazed seal between a ceramic insulator (41) and a metal component (42,50), wherein the brazed seal is substantially free of elements which are not resistant to transmutation at high thermal neutron radiation levels. The brazed seal preferably includes a nickel alloy, in particular, a nickel chromium alloy.

## Description

The present invention relates to a measuring device, e.g. a probe, sensor, measuring or reference electrode, feedthrough or similar for use in high radiation and/or high temperature environments typically experienced in a nuclear reactor as well as a method of making the same. The present invention is particularly useful when the feedthrough, probe, sensor, or measuring or reference electrode is in the core of a nuclear reactor and/or in contact with the cooling fluid of the nuclear reactor, e.g. in boiling water (BWR) or pressurised water reactors (PWR) or gas cooled reactors.

### TECHNICAL BACKGROUND

The nuclear power industry has been engaged for many years in studies and investigations seeking improvements in the performance of the materials and components of the reactor system. In particular, the cooling systems of nuclear reactors such as BWR or PWR's are subject to corrosion. Both irradiation assisted stress corrosion cracking (IASCC) and intergranulation stress corrosion cracking (IGSCC) of the components of the cooling system have been investigated and reported. For such investigations probes, sensors, measuring or reference electrodes or feedthroughs are required in the flow of cooling liquid. These devices should preferably not introduce any materials into the cooling flow which can migrate to other parts of the system causing operative disturbances or corrosion of components nor should these devices leak any cooling liquid which can be radioactive. Particularly difficult is the design of safe and long-lasting probes, sensors, measuring or reference electrodes or feedthroughs which are in contact with the liquid cooling medium in the vicinity of the reactor core. Such probes can experience high temperatures (e.g. 285 to 300°C), high pressures (e.g. 155 bar) and high radiation levels (e.g. 10⁹ Rads per hour gamma radiation and 10¹⁵ neutrons/cm².sec) as well as being in contact with the cooling water which is not only a coolant but also a moderator for the reactor. Typical cooling water additives are boron or lithium which can corrode or dissolve potentially useful materials such as aluminium oxide.

Measuring devices using probes, sensors, measuring or reference electrodes or feedthroughs are also required for measurement in all forms of steam boilers, e.g. to measure the height of the water using a conductivity probe as described in DE 33 35 335. Such probes must withstand temperatures up to about 350°C and pressures of 200 bar.

Such investigations into corrosion or measurements of the properties of steam boilers require a variety of different probes, sensors, measuring or reference electrodes or feedthroughs. Examples of typical known designs are shown schematically in Figs. 1-4. Fig. 1 is a schematic diagram of a reference electrode as described in US 5,043,053. The basic components of this device are a zirconium oxide crucible 2 brazed (9) to a metal (Kovar) sleeve 4 which may be welded to a different metal sleeve 6, an end piece 5 welded to the sleeve 4, 6 and a central conductor 1. The crucible 2 is typically made of zirconia partially stabilised with yttrium. Zirconia is particularly preferred because of its low cross-section towards neutrons. Kovar is particularly preferred because it has a thermal expansion coefficient compatible with zirconia. The central conductor 1 is insulated from the sleeve 4, 6 by an alumina sleeve 3. The electrode is formed using a metal/metal oxide packing 7. The braze 9 provides a hermetic seal and is formed by painting the zirconia crucible 2 with tungsten paint followed by firing, the fired crucible then being nickel plated and sintered, the open end of sleeve 4 is then nickel plated and fired and these operations are repeated. The metallised surfaces are then brazed using a silver braze. In an alternative procedure for a similar design of reference electrode in accordance with US 5,571,384 a silver-titanium brazing material is used. These joining procedures have two major disadvantages. Firstly, the brazing material contains silver which transmutes in the high level of thermal neutron radiation mentioned above. Particularly uncharged neutrons can be effective in colliding with the nucleus of many elements resulting in transformation to another element with the emission of elementary particles. Further, the new element may transmute again producing what is known as a disintegration series. Although this disintegration does not automatically mean that the join 9 will fail, it may in some circumstances alter the mechanical integrity of the brazed seal. It is advisable to remove the reference electrode after a pre-determined time which may be inconvenient as access may not always be available. Further, the products of the disintegration may be leached out and cause corrosion in other components of the cooling system. Secondly, the procedure is complex and expensive. Further details of the design of the reference electrode may be obtained from the above-mentioned patent but are not considered to be particularly relevant to the present invention.

Fig. 2 is a schematic diagram of an electrode in accordance with US 4,636,292 for use in the core of a nuclear reactor and/or the primary or secondary cooling circuits of a nuclear reactor. It consists of a central conductor 10 chosen from the platinum group and an insulator 12 consisting of sintered together particles of alumina or zirconia. The two are joined together under pressure during the formation of the ceramic component 12. An inclined conical surface 11 may be provided for sealing to a passing hole in a suitable holder. The known method of forming the connection between the zirconia 11 and the central conductor 10 requires great care and is limited to solid conductors. A hollow conductor would be crushed at the pressures used. Further details of the operation and design of the electrode may be obtained from the above-mentioned patent but are not considered to be particularly relevant to the present invention.

Fig. 3 is a schematic diagram of feedthrough in accordance with DE 33 35 335. In contrast to the previous designs this feedthrough has mechanical seals. A central bolt 20 serves as electrode and is connected at one end to the electrode body 26, passes through the wall 21 of the boiler and is clamped to this by nuts 27 via a distance piece 28 and a fixing part 22. An insulating tube 24, typically of zirconium oxide and the distance piece 28 insulate the bolt 20 from the other metal parts. The insulating tube 24 is sealed to the fixing part 22 and to the electrode body 26 by means of seals 25 which may be graphite. Such feedthroughs may function in relatively benign environments however the potential for errors while assembling the parts limits the applications to ones where a leakage does not have serious environmental or other effects.

Fig. 4 is a schematic diagram of an instrument known from US 4,965,041 for monitoring the cooling conditions in a light water reactor. Few details are given of the design of the instrument however it includes a metal sleeve 31 sealed at both ends by end pieces 32, sensors 34 and insulating tube 35. To avoid contact between the sensors 34 and the end pieces 32 these are preferably insulating. Hence, there is a need for a reliable join 36 between the metal tube 31 and the insulating end pieces 32.

Some general instructions on use of ceramics both of the crystalline and non-crystalline types may be found in "Hermetic sealing with glass-ceramics", by S. Sridharan and A. Fuierer, published by Ceramaseal. Further properties of zirconia and partly stabilised zirconia may be found in "Zirconia and zirconia ceramics", by R. Stevens, second edition, published by Magnesium Elektron Ltd.

One recognised problem with partly stabilised zirconia (PSZ) is that its crystal structure changes at temperatures above 850°C which may result in considerable decrease in toughness. Hence, to form strong reliable joints it is better to use a brazing material with a brazing temperature below 850°C. A suitable silver-copper brazing material is known from US 4,621,761, however, this brazing material includes elements such as silver which transmute at high thermal neutron levels. US 4,608,321 describes a brazing method for brazing zirconia to a metal at 850°C which also includes silver in the brazing material. US 5,390,843 describes a method for brazing a ceramic to a metal at 850°C which yet again includes silver in the brazing material. Many of these known brazing techniques require pre-metallisation of the ceramic and/or the metal.

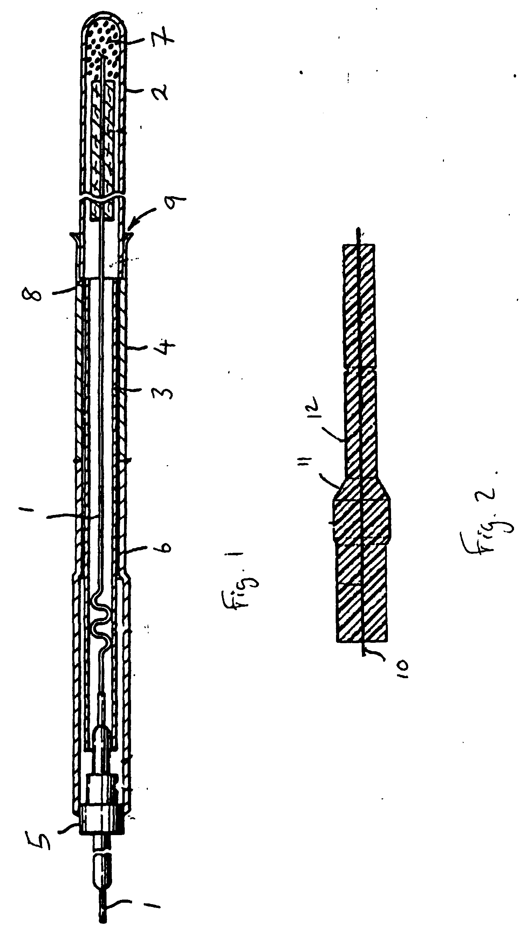

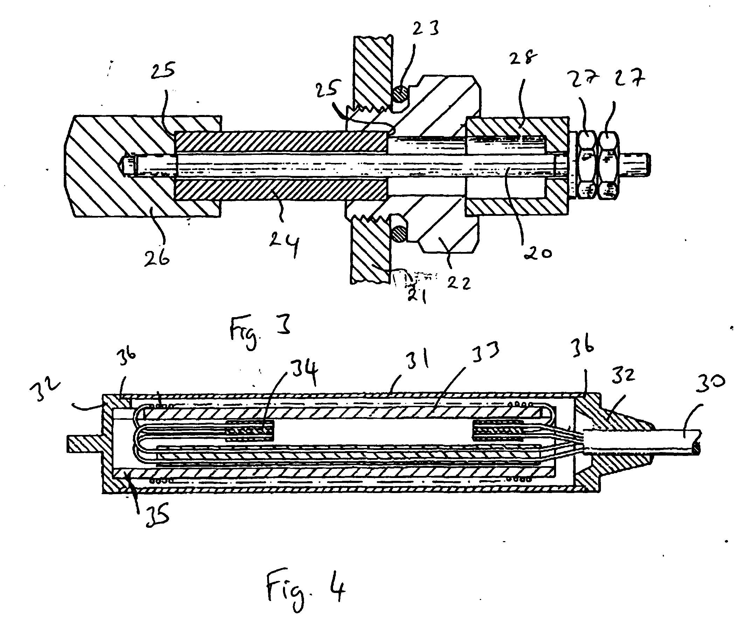

So-called active brazing methods have also been considered as described in US 5,571,384 mentioned above. Active brazing methods are distinguished by containing an element having high oxygen affinity for wetting the surface of the ceramic. Such brazing materials typically contain metals such as titanium, copper, silver, nickel, niobium, zirconium and/or beryllium or mixtures of these. Very often foils have been used. Foils are, however, not very suitable for forming seals around thin wires (e.g. less than 2mm diameter) as shown in Fig. 2 above nor between a ceramic part which closely fits a metal tube as shown in Fig. 1 above. Often the brazing temperatures reported are 900°C or higher thus exceeding the 850°C limit for PSZ. In addition, long brazing times have been reported, e.g. 20 minutes or more.

Summarising the above there is a need for a reliable, cost-effective, mechanically strong seal between a metal oxide ceramic, especially zirconia, in particular, partly or completely stabilised zirconia, and a metal which has a thermal expansion coefficient similar to that of the ceramic and which has a longer life than conventional seal, as well as a method of making the same. Preferably, the seal should withstand temperatures up to 350°C, pressures up to 200 bar as well as high radiation levels and to resist corrosion even in cooling water of a nuclear reactor containing lithium or boron.

In addition there is a need for a brazing method for brazing a metal oxide ceramic, especially zirconia, in particular partly or completely stabilised zirconia, to a metal which has a thermal expansion coefficient similar to that of the ceramic to form a reliable, mechanically strong seal in a cost-effective and quick way. The brazed seal should have a long useful life under the high thermal neutron radiation levels encountered in a nuclear reactor. Preferably, the brazing technique should not require metallisation of the components to be joined before brazing.

It is an object of the present invention to provide a seal and a method of making the seal for a probe, measuring or reference electrode, sensor or feedthrough which meets the above requirements.

It is also an object of the present invention to provide an improved probe, measuring or reference electrode, sensor, or feedthrough for environments with high thermal neutron radiation levels.

In particular, it may be an object of the present invention to provide a brazing method for sealing a probe, measuring or reference electrode, sensor or feedthrough which does not require metallisation of the components before brazing.

### SUMMARY OF THE INVENTION

The present invention may provide a device, e.g. a probe, measuring or reference electrode, feedthrough or sensor, including a brazed seal between a ceramic insulator and a metal component, wherein in the brazed seal is substantially free of elements which are not resistant to transmutation at high thermal neutron radiation levels. The device is preferably suitable for inclusion in a nuclear reactor in particular for introduction into the core and/or in the primary or secondary cooling system of a nuclear reactor. The brazed seal preferably does not include materials generate a disintegration series. The brazed seal may be alternatively or additionally substantially free of neutron absorbers. In one embodiment the brazed seal includes a nickel alloy, in particular, a nickel chromium alloy. The metal is preferably substantially resistant to transmutation at high thermal neutron radiation levels and preferably has a low cross-section to neutrons and preferably has a thermal expansion which is comparable with that of the ceramic insulator. The metal for a sleeve is preferably zirconium and is most preferably a zirconium alloy. The metal for a wire is preferably tungsten or a member of the platinum group. Metals for metal-metal connections may include zirconium, zirconium alloys, stainless steel and specialised alloys such as Kovar or Inconel. The ceramic material of the insulator is preferably substantially resistant to transmutation at high thermal neutron radiation levels and preferably has a low cross-section with respect to neutrons and may be alumina or one of its derivatives and is more preferably zirconium oxide, e.g. zircon or zirconia, most preferably at least partially stabilised zirconium oxide. The ceramic material of the insulator is additionally or alternatively preferably not attacked by cooling fluids used in nuclear reactors containing typical moderators such as boron or lithium. The brazed seal preferably does not include pre-metallised surfaces of the ceramic and/or the metal components.

The present invention includes a nuclear reactor including a probe, measuring or reference electrode, feedthrough or sensor as described above. In particular, the present invention includes a probe, measuring or reference electrode, feedthrough or sensor as described above in the core and/or in the primary or secondary cooling circuit of a nuclear reactor such as a PWR or BWR.

The present invention also includes a method of sealing a ceramic insulator to a metal component which includes the step of brazing the ceramic insulator to the metal component with a brazing powder substantially free of elements which are not resistant to transmutation in high thermal neutron radiation environments. The brazing step is preferably completed so that the ceramic insulator is at temperatures above 900°C for less than 15 minutes, more preferably at 10 minutes or less. The brazing step is preferably carried out under vacuum. The brazing powder may be alternatively or additionally substantially free of neutron absorbers. In one embodiment the brazing powder includes a nickel alloy, in particular, a nickel chromium alloy. The metal of the metal component is preferably substantially resistant to transmutation at high thermal neutron radiation levels and preferably has a low cross-section to neutrons and preferably has a thermal expansion which is comparable with that of the ceramic insulator. The metal for a sleeve is preferably zirconium and is most preferably a zirconium alloy. The metal for a wire is preferably tungsten or a member of the platinum group. Metals for metal-metal connections may include zirconium, zirconium alloys, stainless steel and specialised alloys such as Kovar or Inconel. The ceramic material of the insulator is preferably substantially resistant to transmutation at high thermal neutron radiation levels and preferably has a low cross-section with respect to neutrons and may be alumina or one of its derivatives and is more preferably zirconium oxide, e.g. zircon or zirconia, most preferably at least partially stabilised zirconium oxide. The ceramic material of the insulator is additionally or alternatively preferably not attacked by cooling fluids used in nuclear reactors containing typical moderators such as boron or lithium. The brazing step preferably does not include pre-metallising the surfaces of the ceramic and/or the metal components.

In accordance with the present invention the term "resistance to high levels of thermal neutron radiation" means that the materials used in the construction of the measuring device in accordance with the present invention should not transmute to a significant degree in the thermal neutron levels encountered in the primary or secondary cooling system of a nuclear reactor as well as in the core of such a reactor such that elements are produced which can lead to mechanical failure of the device (e.g. by embrittlement) or may be leached into the cooling system by dissolving or by forming an electrochemical couple with any other materials. This particularly applies to those materials which are directly in contact with the cooling fluid. It is anticipated that suitable materials will have a thermal neutron cross-section of less than 20 barn and preferably less than 11 barn. In particular elements which form a long disintegration series are not preferred.

Further, the term "high levels of thermal neutron radiation" means in accordance with this invention a total fluence of at least 10²¹ neutrons/cm². Neutron fluence is the product of the neutron flux and the exposure time, i.e the total number of thermal neutrons which penetrate 1 cm² and is the relevant factor as it determines the amount of transmuted elements present in the device after irradiation. Typically the thermal neutron flux will be 10¹³ neutrons/cm².sec or greater.

In accordance with the present invention the term "substantially free of ..." means less than 10%, preferably less than 5%, e.g. 3% or less of the relevant component.

The present invention may provide the advantage that reliable seals may be produced without complex and expensive pre-metallising of the ceramic and/or metal components. Further, the seals produced are resistant to thermal neutron radiation and may therefore have a long life.

The dependent claims define individual embodiments of the present invention. The present invention its advantages and embodiments will now be described with reference to the following drawings.

### BRIEF DESCRIPTION OF THE DRAWINGS

Fig. 1 is a schematic representation of a reference electrode with which the present invention may be used.
Fig. 2 is a schematic representation of an electrode with which the present invention may be used.
Fig. 3 is a schematic representation of a conventional feedthrough for boilers.
Fig. 4 is a schematic representation of a sensor with which the present invention may be used.
Fig. 5 is a schematic representation of a feedthrough in accordance with one embodiment of the present invention.

### DESCRIPTION OF THE ILLUSTRATIVE EMBODIMENTS

The present invention will be described with reference to certain embodiments and with reference to certain drawings but the invention is not limited thereto but only by the claims. In particular, the present invention may find general application in joining a ceramic to metal parts. For example, the present invention specifically includes any or all of the types of sensors, feedthroughs, measuring or reference electrodes and probes of the types described with reference to Figs. 1, 2 and 4 as well as any modifications thereto or derivatives thereof. In the following the present invention will be described mainly with reference to a feedthrough but this is non-limiting and has been done for convenience as a feedthrough includes three of the basic elements often found in probes, measuring or reference electrodes, or sensors, etc., namely a wire passing through, and joined to a ceramic body and sealed thereto and a metal tube joined and sealed to the ceramic body. A feedthrough is also a suitable example of the present invention as a feedthrough may include two different types of metal which are in close proximity to each other and have to be joined and sealed to the same ceramic body without the joining method of the one metal interfering with the joint of the other metal to the ceramic body.

In the probes, sensors, measuring or reference electrodes and feedthroughs according to the present invention it is preferred to use zirconium oxide as an insulating material where this material is in contact with cooling liquids of a nuclear reactor. For example zircon may be used but zirconia is preferred. In particular the zirconium oxide is preferably at least partially stabilised. Suitable stabilisers are calcium, magnesium or yttrium which is a non-limiting list. One preferred metal preferably used for sleeves joined to the insulating material in the probes, sensors, measuring or reference electrodes and feedthroughs in accordance with the present invention is zirconium or a zirconium alloy such as Zircaloy, in particular Zircaloy 2 or 4 or other zirconium alloys such as the zirconium alloy which contains 0.05-0.09 weight percent iron, 0.03-0.05 weight percent chromium, 0.02-0.04 weight percent tin and 0-0.015 weight percent oxygen, balance zirconium described in US 5,699,396 which is incorporated herein by reference.

For insulating material and metals not in contact with the cooling liquid of the nuclear reactor less stringent requirements need to be met and therefore other materials may be used, e.g. alumina in one of its forms for the insulating material and stainless steel, Kovar, Inconel, etc. for metal components.

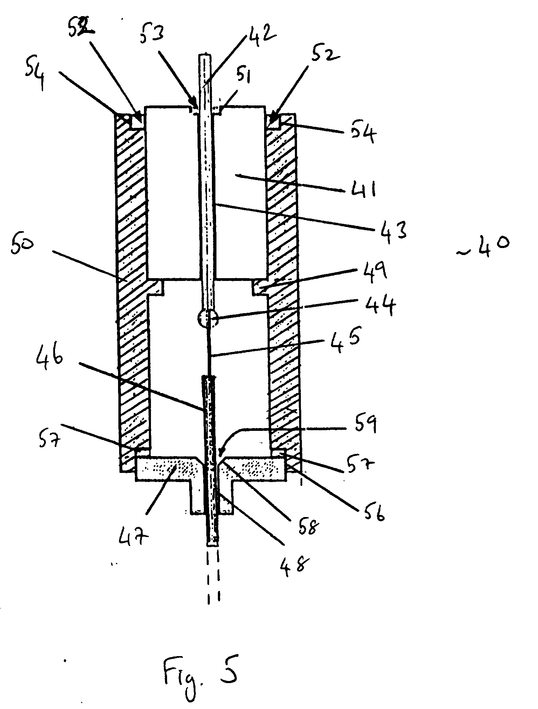

A cross-section through a feedthrough 40 in accordance with an embodiment of the present invention is shown schematically in Fig. 5. It should be understood that the feedthrough 40 is basically cylindrical. However, the cross-section may be any suitable one such as circular or polygonal, such as square, hexagonal or oval as required. It should also be understood that this embodiment will be used to describe particular aspects of the present invention but should not be considered limiting on the invention. In particular, the methods and claimed teachings of the present invention may find application in a wide range of other sensors, measuring or reference electrodes, feedthroughs and probes known, for instance, per se from the following patents but without the novel and inventive features of the present invention: US 4,965,041, US 5,192,414, US 5,217,596, US 5,118,913, US 4,636,292, US 4,948,492, US 5,571,394, and US 5,043,053. In the application of the present invention to these known devices it is preferable to use PSZ as the insulating ceramic in contact with cooling liquid in a nuclear reactor, e.g. for crucibles or ceramic bodies, zirconium or zirconium alloys for tubes and sleeves in contact with the cooling liquid of a nuclear reactor and metals from the platinum group, tungsten or palladium for wires and leads which are sealed to the ceramic body and may be in contact with the cooling liquid of the nuclear reactor.

In Fig. 5, 41 represents a ceramic body, preferably made from PSZ, in particular magnesium stabilised zirconium oxide, e.g. as supplied by NILCRA Ceramics (USA) Inc. under the product name Nilcra PSZ, MS or TS grade. The PSZ powder is introduced into a mould with a fine (about 1.5mm diameter) central rod and compressed at a high pressure, e.g. 1000 bar to form a body with a central fine bore. The body is then calcined at a first temperature, e.g. 600°C and sintered at higher temperature, e.g. 1650°C. After cooling the outer diameter of the body 41 is brought to the right value by wet lapping. The upper surface of the body 41 may be provided with an annular depression 51, e.g. cone-shaped or cylindrical, about the exit of the fine bore 43.

The ceramic body 41 is sized to fit snugly into the distal end of a passing metal sleeve 50 which is preferably made of zirconium or a zirconium alloy, in particular, Zircaloy 2 or 4. The sleeve 50 may be provided with protrusions 49 onto which the ceramic body 41 may rest. Annular grooves 54 may be machined into the sleeve 50 at its upper (distal) end. Alternatively, the upper outer rim of the ceramic body 41 may be provided with a chamfer.

A wire or rod 42 which fits snugly in the bore 43 of ceramic body 41 is welded to the conductor 45 of a coaxial cable 46. The weld connection 44 may be provided by spot-welding or laser welding, for instance. The wire rod in this non-limiting example is 1mm in diameter and may be made from tungsten or from a metal of the platinum group. The wire 42 is in introduced into the ceramic body 41 and a closing plate 47 is fitted to the proximal end of the sleeve 50. Sleeve 50 is preferably provided with suitable machined recessions 56 for receiving the plate 47. Plate 47 has an inner bore 48 which fits snugly over the outer diameter of the coaxial cable 48. The plate 47 may be made, for instance of stainless steel, e.g. 18/8, or zirconium or a zirconium alloy or other metals such as Kovar or Inox steel. The coaxial cable 48 may be, for instance, a mineral insulated cable having an inner conductor 45 of Inconel 600, an insulation of magnesium oxide and an outer sheath of nickel or Inox 304 stainless steel. The plate 47 may be provided with a conical recess 58 but this is optional. Plate 47 may be welded to the cable 48, e.g. by electron beam or laser welding.

Brazing powder 52, 53, 57, and optionally 59 if the plate 47 is to be brazed to cable 48 is introduced into the recessions 51, 54, 56 and optionally 58. Powder is preferred in accordance with the present invention rather than a foil as foil is difficult to place accurately and in confined or small spaces. For applications in high radiation environments, it is preferred in accordance with the present invention if the brazing material forms a seal substantially free of materials which transmute at high thermal neutron radiation levels. It is also preferable if the brazing powder forms a seal which is substantially free of neutron absorbers. This means that traditional soldering or brazing materials such as copper, silver, tin and lead are preferably not used. The effect of this is to increase the brazing temperature above 850°C. In accordance with the present invention a brazing powder should be sought or designed which reacts vigorously with the components to be joined so that the brazing time is reduced to a minimum. In order to avoid degradation of the PSZ of the body 41 it is preferred in accordance with the present invention if the brazing powder rapidly and reactively combines with the PSZ and the material of the sleeve 50 so as to form a liquid phase and to complete the brazing in the shortest possible time. No plating of the surfaces of the ceramic body 41 nor the metal sleeve 50 nor the plate 47 nor cable 48 nor wire 42 are required in accordance with the present invention which is a major advantage. When PSZ is used as the insulating material to be brazed, it is preferred in accordance with the present invention if the time spent above 900°C during the brazing process is preferably less than 15 minutes and more preferably 10 minutes or less and most preferably 8 minutes or less. Brazing powders which have been found to be suitable in accordance with the present invention are based on nickel, in particular, are nickel chromium alloys, e.g. Nicrobraz LM or Nicrobraz 30 supplied by Wall Colmonoy, Michigan, USA. Nicrobraz 30 is generally preferred over LM as is does not contain boron, a well known neutron absorber. However, Nicrobraz LM is somewaht easier to control during the brazing process and the low quantity of boron has not shown deleterious effects. If necessary, brazing cement (supplied by Wall Colmonoy, Michigan, USA, for example) maybe used to localise the brazing powder. The cement is burnt out during brazing.

The brazing procedure is carried out in an oven under vacuum. The assembled components are brought up to the temperature of 800°C, e.g. at a rate of at least 10°C per minute. Slow heating ensure that all parts of the assembly have reached the same temperature independent of their thickness. Between 800°C and the maximum temperature which may be 1195°C for example, the oven temperature is raised rapidly, e.g. at 30 to 100° C per minute. Once the temperature has reached the maximum of 1195°C the assembly is maintained for the shortest possible time, preferably no time, before the temperature is dropped rapidly at 30 to 100°C per minute, for instance, until 900°C is reached. After reaching 900°C, 850°C or 800°C, the temperature may be lowered more slowly, e.g. at 10°C per minute down to room temperature in order to avoid stresses being introduced in the ceramic/metal composite. Alternative procedures for raising and lowering the temperature in the oven are possible. As an example, the combination of an Mg stabilised PSZ body 41, Zircaloy 4 sleeve 50, Pt wire 42, a stainless steel plate 47 and a coaxial cable 46 with a stainless steel sheath were brazed with Nicobraz LM brazing powder in a single step in the following way: the temperature was raised at 30°C per minute up to 1070°C in vacuum. The assembly was maintained at this temperature for 1 minute and then the temperature was reduced at 50°C per minute to room temperature. The total time above 900°C was 10 minutes. All seals were intact and the electrical connection through the coaxial cable was still good. For Nicobraz 30, the following brazing procedure has been found useful with the above components: the temperature is raised at 10°C/min to 800 °C, further increase to 1195°C at 100 °C/min, immediate reduction to 900 °C at 100 °C/min (little or no dwell time at 1195°C), and decrease to 25°C at 10°C/min. Total time above 900 °C was 4 minutes.

As described above all the brazing steps to join the rod 42 to the ceramic body 41, the body 41 to the sleeve 50 and the sleeve 50 to the plate 47 were carried out at the same time which is a significant advantage of the present invention. The seals produced were excellent and remained tight even up to 350°C. No significant deterioration of the PSZ was observed.

Although described as a single process, each aspect of the joining procedure of the feedthrough 40 may carried out individually. For instance, in preparing an electrode in accordance with Fig. 2 as an embodiment of the present invention it is only necessary to seal the wire 10 made from a metal of the platinum group to a PSZ body 12. Similarly, a PSZ crucible 2 of the electrode of Fig. 1 need only be joined to a zirconium or zirconium alloy sleeve 4 in accordance with another embodiment of the present invention. Further, end caps 32 of the device in accordance with Fig. 4 may be brazed to a metal sleeve 31 made from zirconium or a zirconium alloy in accordance with a further embodiment of the present invention. If the brazing temperatures described above are too high for the sensors 34, the sleeve 31 may be made in two halves. Each half is jointed to its respective PSZ end cap 36 by the method in accordance with the present invention. Finally the cable 30 is introduced into the respective end cap 32 and the two halves of the sleeve 31 welded together by conventional techniques.

The present invention includes a probe, measuring or reference electrode, sensor, or feedthrough in accordance with the present invention installed in a gas or water cooled nuclear reactor such as a PWR or BWR, particularly in the primary or secondary cooling circuit thereof.

## Claims

1. A device, in particular a probe, measuring or reference electrode, feedthrough or sensor, including a brazed seal between a ceramic insulator and a metal component, wherein the brazed seal is substantially free of elements which are not resistant to transmutation at high thermal neutron radiation levels.

2. A device according to claim 1, wherein the brazed seal includes a nickel alloy, in particular, a nickel chromium alloy.

3. A device according to claim 1 or 2, wherein the brazed seal does not include pre-metallised surfaces of the ceramic and/or the metal component.

4. A method of sealing a ceramic insulator to a metal component which includes the step of brazing the ceramic insulator to the metal component with a brazing powder substantially free of elements which are not resistant to transmutation in high thermal neutron radiation environments.

5. A method according to claim 9, wherein the brazing step is preferably completed so that the ceramic insulator is at temperatures above 900°C for less than 15 minutes, more preferably at 10 minutes or less.

6. A method according to claim 4 or 5, wherein the brazing powder includes a nickel alloy, in particular, a nickel chromium alloy.

7. A method according to any of claims 4 to 6, wherein the brazing step does not include pre-metallising the surfaces of the ceramic and/or the metal components.

8. A device according to any of claims 1 to 3, or a method according to any of claims 4 to 7, wherein the metal component is preferably substantially resistant to transmutation at high thermal neutron radiation levels and preferably has a low cross-section to neutrons and preferably has a thermal expansion which is comparable with that of the ceramic insulator.

9. A device according to any of claims 1-3 or 8, or a method according to any of claims 4 to 8, wherein the metal of the metal component is preferably zirconium and is most preferably a zirconium alloy.

10. A device according to any of claims 1-3, 8 or 9, or a method according to any of claims 4 to 9, wherein the metal of the metal component is preferably platinum, tungsten or a member of the platinum group.

11. A device according to any of claims 1-3, or 8-10, or a method according to any of claims 4 to 10, wherein the ceramic material of the insulator is preferably substantially resistant to transmutation at high thermal neutron radiation levels and preferably has a low cross-section with respect to neutrons and may be alumina or one of its derivatives and is more preferably zirconium oxide, for example zircon or zirconia and most preferably at least partially stabilised zirconium oxide.

12. A device according to any of claims 1-3 or 8-11, or a method according to any of claims 4 to 11, wherein the ceramic material of the insulator is additionally or alternatively preferably not attacked by cooling fluids used in nuclear reactors containing typical moderators such as boron or lithium.
